# EUROPEAN PATENT APPLICATION

(11) **EP 2 184 947 A1**
(43) Date of publication of application: **12.05.2010**
(21) Application number: 08842243.1
(22) Date of filing: 15.10.2008
(51) Int. Cl.: H04W 80/00, H04W 76/02

(54) **MOBILE COMMUNICATION SYSTEM, COMMUNICATION METHOD, AND MOBILE STATION, RADIO BASE STATION, AND ITS UPPER NODE DEVICE USED FOR THE SYSTEM**

(30) Priority: 24.10.2007 JP 2007275863
(71) Applicant: Nec Corporation, Tokyo 108-8001 (JP)
(72) Inventor: ITABA, Naoto, Tokyo 108-8001 (JP)
(74) Representative: Glawe, Delfs, Moll
(86) International application number: PCT/JP2008/068642
(87) International publication number: WO 2009/054294

(57) **Abstract**

The present invention provides a mobile communication system configured such that in transferring a control message not requiring establishment of a connection, the system transfers the control message without establishing a connection. The mobile communication system according to the present invention includes a mobile station, a radio base station, and a higher-order apparatus for the radio base station. When transmitting a control message from the mobile station to the higher-order apparatus, the mobile station transmits information to the higher-order apparatus, indicating whether or not it is necessary to establish an individual connection for the mobile station. The higher-order apparatus receives and uses the information to determine that it is not necessary to establish the individual connection for the mobile station.

## Description

### Technical Field

The present invention relates to a mobile communication system, a communication method, a mobile station, and a radio base station, and a higher-order apparatus for the radio base station used for the mobile communication system and the communication method.

### Background Art

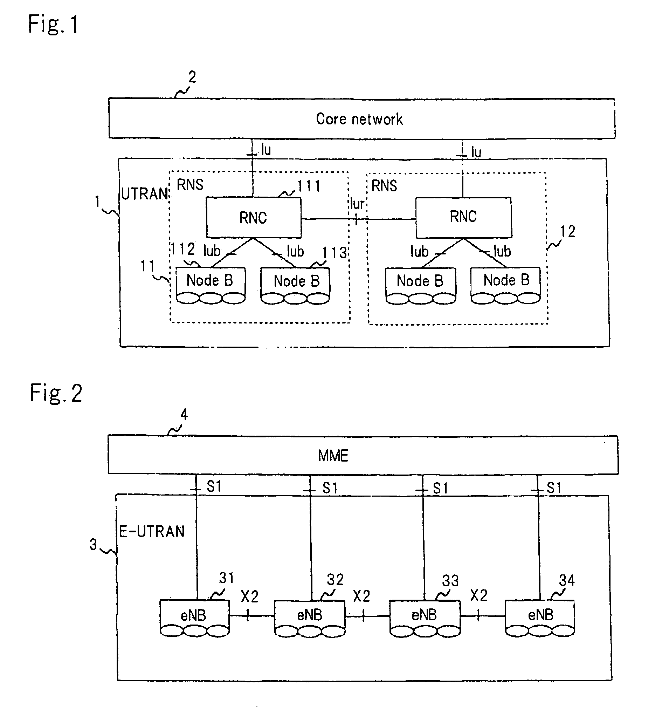

Figure 1 shows the general configuration of a UTRAN in a mobile communication system. In Figure 1, UTRAN 1 includes RNSs (Radio Network Subsystems) 11 and 12. RNS 11 includes RNC (Radio Network Controller) 111 and NodeBs (radio base stations) 112 and 113. Other RNS 12 is configured equivalently to RNS 11.

RNC 111 is connected to core network 2 via an interface called Iu and to NodeBs 112 and 113 via an interface called Iub. Moreover, RNC 111 is connected to RNCs included in other RNS 12 via an interface called Iur.

In the 3GPP (3rd Generation Partnership Project), an RRC (Radio Resource Control) message as a control message is specified between UTRAN and UE so that UTRAN 1 can control mobile stations (hereinafter referred to as UE (User Equipment); not shown in the drawings). Furthermore, also in the 3GPP, an NAS (Non-Access Stratum) message as a control message is specified between core network 2 and UE so that core network 2 can control the UE. The NAS is defined as a protocol specified between the UE not terminated by the UTRAN and the core network.

The RRC message and NAS message, which are control messages, are handled independently. When the UE transfers the NAS message to the core network, first, the RRC message is used to establish an individual connection for the UE between the UTRAN and the UE. After the connection is established, the UE transfers the NAS message to the core network.

In connection with standardization of the 3GPP, effort has been made to develop the UTRAN (UTRAN LTE (Long Team Evolution): hereinafter referred to as an LTE scheme) so that the UTRAN can remain competitive with the development of other radio communication techniques such as radio LANs (see, for example, Non-Patent Documents 1 to 3). In the LTE scheme, as shown in Figure 2, UTRAN 3 includes nodes called eNBs (evolved NodeBs) 31 to 34 in which RNC 111 and NodeB 112 or 113 shown in Figure 1 are integrated together.

In the LTE scheme, UTRAN 1 shown in Figure 1 is defined as E-UTRAN (Evolved UTRAN) 3. Furthermore, in the LTE scheme, the control function section of core network 2 is defined as MME (Mobility Management Entity) 4.

Furthermore, the interface between each of eNBs 31 to 34 and MME 4 is defined as S1. The interface between eNBs is defined as X2. When RNC and NodeB according to the LTE scheme are integrated together, the number of nodes included in E-UTRAN 3 is reduced compared to that in UTRAN 1 shown in Figure 1. The reduction in the number of nodes serves to reduce a delay in the setting of the connection between the UE and the eNB and the MME which is required for communication of the UE. This is because the setting of the connection between the RNC and the NodeB in UTRAN 1 is not required for E-UTRAN 3 in Figure 2.

Moreover, for the LTE scheme, a proposal has been made to join the above-described NAS message to an RRC message required to establish a connection between the E-UTRAN and the UE. This is expected to allow the establishment of the connection and the transfer of the NAS message to be simultaneously carried out to reduce the delay in the setting of the connection.

Non-Patent Document 1: "Evolved Universal Terrestrial Radio Access (E-UTRA) and Evolved Universal Terrestrial Radio Access Network (E-UTRAN); Overall description" [3GPP TS36.300v8.1.0 (2007-06)]
Non-Patent Document 2: "Feasibility study for evolved Universal Terrestrial Radio Access (UTRA) and Universal Terrestrial Radio Access Network (UTRAN)" [3GPP TR25.912 v7.1.0 (2006-09)]
Non-Patent Document 3: "3GPP System Architecture Evolution on Technical Options and Conclusions" [3GPP TR23.882 v1.8.0 (2007-02)]

### Disclosure of the Invention

### Problems to be Solved by the Invention

In the above-described LTE scheme, three states, "LTE_DETACHED", "LTE_ACTIVE", and "LTE_IDLE", are defined as the states of the UE. In "LTE_DETACHED", the power supply to the UE is off. In "LTE_ACTIVE", the individual connection for the UE has been established. In "LTE_IDLE", the power supply to the UE is on, but the individual connection for the UE has not been established.

For example, when the "LTE_IDLE" state changes to the "LTE_DETACHED" (power off) state, if a procedure similar to that for the existing UTRAN shown in Figure 1 is used for the LTE scheme shown in Figure 2, then first, the RRC message, which is the control message between the UE and the E-UTRAN, is used to establish an individual connection for the UE. After the connection is established, the UE transmits the NAS message, which is the control message between the UE and MME, to the MME to instruct that power be turned off.

In the "LTE_DETACHED" state, the power supply to the UE is off. Hence, the connection established in order to transfer the NAS message is not used and needs to be deleted. Thus, if a procedure similar to the procedure for the existing UTRAN is used for the LTE scheme, then in some cases, a connection that is finally deleted will be clearly be established.

Moreover, in the existing UTRAN shown in Figure 1, an RNC is generally located in a place such as a station building for which security is ensured. Thus, when the control message is exchanged between the UE and the UTRAN or between the UE and the core network via the UTRAN, security processing (ciphering (secrecy) and integrity protection (detection of alteration)) is carried out on the control message only between the UTRAN and the UE. Hence, if security processing is carried out on the NAS message, a connection needs to be established between the UE and the UTRAN using the RRC message.

As described above, in the above-described mobile communication system, the otherwise unnecessary process of establishing a connection disadvantageously needs to be carried out to allow the control message to be transferred between the mobile station and the higher-order station.

The present invention has been developed in view of the above-described problems. The present invention provides a mobile communication system, a communication method, a mobile station, a radio base station, and a higher-order apparatus for the radio base station used for the mobile communication system and the communication method in which when a control message that does not require that a connection be established is transferred, the control message is transferred without the need to establish a connection.

The present invention provides a mobile communication system including a mobile station, a radio base station, and a higher-order apparatus for the radio base station, wherein in transmitting a control message from the mobile station to the higher-order apparatus, the mobile station transmits information to the higher-order apparatus, indicating whether or not an individual connection for the mobile station needs to be established, and the higher-order apparatus receives and uses the information to determine that is not necessary to establish a connection.

The present invention provides a communication method for a mobile communication system including a mobile station, a radio base station, and a higher-order apparatus for the radio base station, comprising, when transmitting a control message from the mobile station to the higher-order apparatus, transmitting information, to the higher-order apparatus, indicating whether or not an individual connection for the mobile station needs to be established, the information being used by the higher-order apparatus to determine that it is not necessary to establish the individual connection for the mobile station.

The present invention provides a mobile station in a mobile communication system including the mobile station, a radio base station, and a higher-order apparatus for the radio base station, comprising a transmission section which, when transmitting a control message from the mobile station to the higher-order apparatus, transmits information, to the higher-order apparatus, indicating whether or not an individual connection for the mobile station needs to be established, the information being used by the higher-order apparatus to determine that it is not necessary to establish the individual connection for the mobile station.

The present invention provides a radio base station in a mobile communication system including a mobile station, the radio base station, and a higher-order apparatus for the radio base station, comprising a first transmission section which receives information indicating whether or not an individual connection for the mobile station needs to be established, the information being transmitted by the mobile station, when transmitting a control message from the mobile station to the higher-order apparatus, and used by the higher-order apparatus to determine that it is not necessary to establish the individual connection for the mobile station, and a second transmission section which transmits both the control message from the mobile station to the higher-order apparatus and the information contained in a control message to the higher-order apparatus.

The present invention provides a higher-order apparatus in a mobile communication system including a mobile station, a radio base station, and the higher-order apparatus for the radio base station, comprising a transmission section which receives information indicating whether or not an individual connection for the mobile station needs to be established, the information being transmitted by the mobile station when transmitting a control message from the mobile station to the higher-order apparatus, and a control section which uses the information to determine that it is not necessary to establish a connection.

The present invention provides a program for allowing a computer to execute an operation of a mobile station in a mobile communication system including the mobile station, a radio base station, and a higher-order apparatus for the radio base station, comprising a process of, when transmitting a control message to the higher-order apparatus for the mobile station, transmitting information, to the higher-order apparatus, indicating whether or not an individual connection for the mobile station needs to be established, the information being used by the higher-order apparatus to determine that it is not necessary to establish the individual connection for the mobile station.

The present invention provides another program for allowing a computer to execute an operation of a radio base station in a mobile communication system including a mobile station, the radio base station, and a higher-order apparatus for the radio base station, comprising a process of receiving information indicating whether or not an individual connection for the mobile station needs to be established, the information being transmitted by the mobile station when transmitting a control message to the higher-order apparatus for the mobile station and used by the higher apparatus to determine that it is not necessary to establish the individual connection for the mobile station, and a process of transmitting both the control message from the mobile station to the higher-order apparatus and the information contained in a control message to the higher-order apparatus.

The present invention provides another program for allowing a computer to execute an operation of a higher-order apparatus for a radio base station in a mobile communication system including a mobile station, the radio base station, and the higher-order apparatus for the radio base station, comprising a process of receiving information indicating whether or not an individual connection for the mobile station needs to be established, the information being transmitted by the mobile station when transmitting a control message from the mobile station to the higher-order apparatus, and a process for determining that it is not necessary to establish the connection.

### Brief Description of the Drawings

Figure 1 is a schematic block diagram of an existing mobile communication system;
Figure 2 is a schematic block diagram of a mobile communication system according to an LTE scheme which has been proposed in the 3GPP;
Figure 3 is a schematic functional block diagram of UE according to the present invention;
Figure 4 is a schematic functional block diagram of an eNB according to the present invention;
Figure 5 is a schematic functional block diagram of an MME according to the present invention;
Figure 6 is a diagram illustrating the general operation according to the present invention;
Figure 7 is a functional block diagram of UE used in an exemplary embodiment;
Figure 8 is a functional block diagram of an eNB used in the exemplary embodiment;
Figure 9 is a functional block diagram of an MME used in the exemplary embodiment;
Figure 10 is a sequence diagram of an operation performed when an "LTE_IDLE" state changes to an APPLICATION start state according to the exemplary embodiment;
Figure 11 is a sequence diagram of an operation performed when the "LTE_IDLE" state changes to an APPLICATION end state according to the exemplary embodiment;
Figure 12 is a sequence diagram of an operation performed when the "LTE_IDLE" state changes to the APPLICATION end state according to the related art;
Figure 13 is a sequence diagram of an operation performed when the "LTE_IDLE" state changes to an "LTE_DETACHED" state according to the exemplary embodiment; and
Figure 14 is a sequence diagram of an operation performed when the "LTE IDLE" state changes to the "LTE_DETACHED" state according to the related art.

### Description of Symbols

- 1: UTRAN
- 2: Core network
- 3: E-OUTRAN
- 4: MME
- 11, 12: RNC
- 31 to 34: eNB
- 111: RNC
- 112, 113: NodeB
- 41, 51: NAS layer sections
- 42, 312: RANAP layer sections
- 43, 53, 311, 314, 301, 302, 401, 501: Transmission sections
- 44, 54, 315, 401: Control sections
- 42, 55, 316: Memories
- 52, 313: RRC layer sections

### Best Mode for Carrying Out the Invention

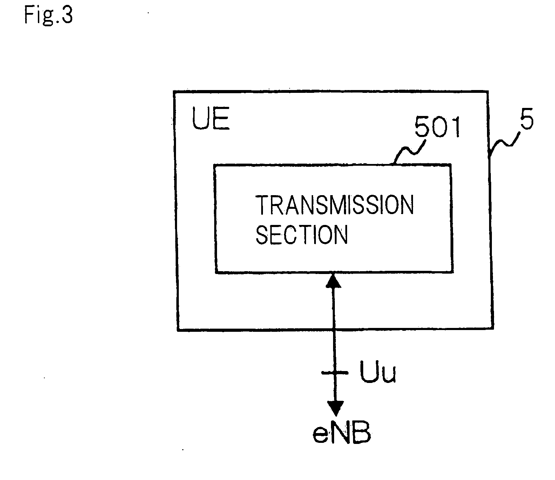

An exemplary embodiment will be described below. Before providing description of the exemplary embodiment, the principle will be described with reference to Figures 3 to 6. Figure 3 is a schematic functional block diagram of UE (mobile station) according to the present invention. UE 5 includes transmission section 501. Transmission section 501 has the function of transmitting connection establishment necessity information indicating whether or not an individual connection for the UE needs to be established, to an MME (higher-order apparatus) via an eNB (radio base station) connected to transmission section 501 via an Uu interface, together with a control message for the MME.

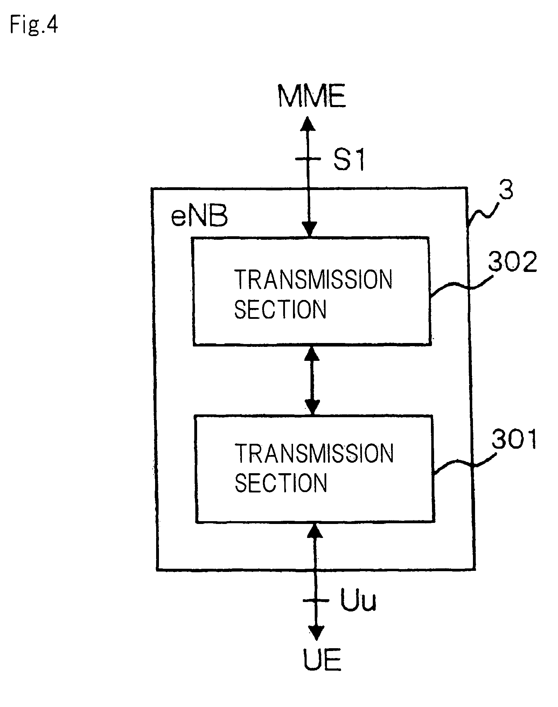

Figure 4 is a schematic function block diagram of an eNB (radio base station) according to a first exemplary embodiment. eNB 3 includes first transmission section 301 and second transmission section 302. First transmission section 301 has the function of receiving the connection establishment necessity information transmitted by UE 5 when transmitting a control message for the MME for the UE, together with the control message for the MME. Hence, first transmission section 301 is connected to the UE via the Uu interface. Second transmission section 302 has the function of transmitting both the control message for the MME for the UE and the connection establishment necessity information contained in the control message for the MME. Hence, second transmission section 302 is connected to the MME via an S1 interface.

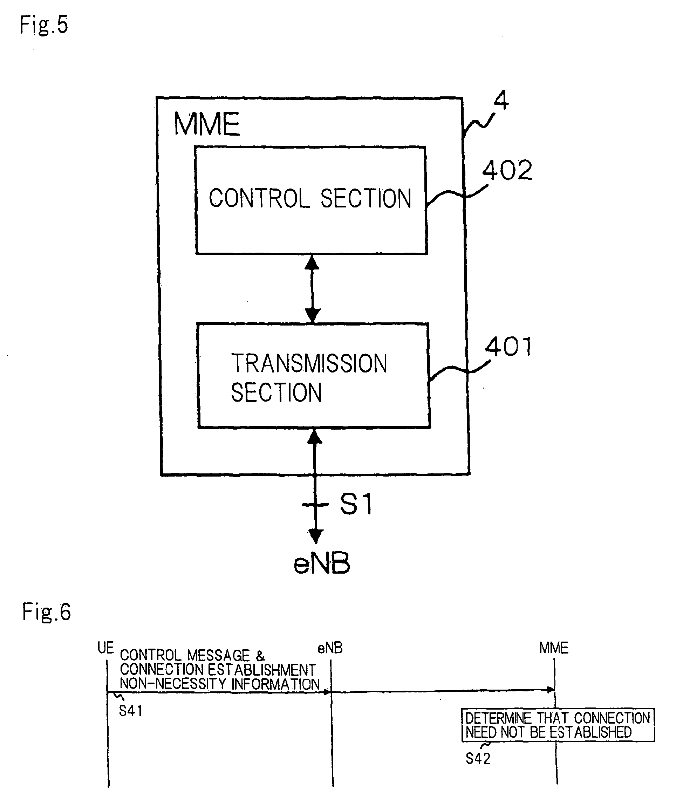

Figure 5 is a schematic functional block diagram of the MME (higher-order apparatus) according to the present invention. MME 4 includes transmission section 401 and control section 402. Transmission section 401 has the function of receiving the connection establishment necessity information transmitted by UE 5 when transmitting the control message for the MME for the UE. Hence, transmission section 401 is connected to the eNB via the S1 interface. Control section 402 has the function of using the connection establishment necessity information to determine that an individual connection for the UE need not be established.

Figure 6 is a diagram schematically illustrating the operation according to the present invention. The UE transmits connection establishment necessity information to the MME via the eNB together with a control message for the MME (step S41). The MME uses the connection establishment necessity information to determine that no connection needs to be established (step S42). This allows the control message to be transferred without the need to establish the individual connection for the UE used for the control message. Hence, processing carried out by the eNB to establish the connection can be reduced. The amount of control messages transmitted and received between the eNB and the MME can also be reduced.

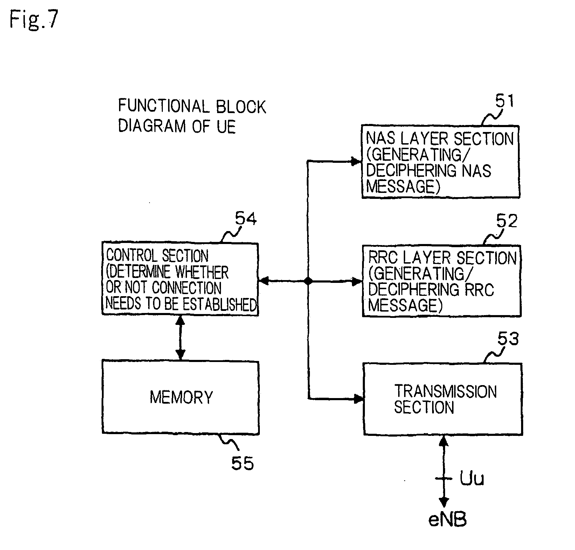

The exemplary embodiment will be described below with reference to the drawings. Figure 7 is a schematic functional block diagram of the UE used in the exemplary embodiment. The UE according to the exemplary embodiment includes NAS layer section 51, RRC layer section 52, transmission section 53, control section 54, and memory 55.

NAS layer section 51 has the function of generating and deciphering NAS messages. RRC layer section 52 has the function of generating and deciphering RRC messages. Transmission section 53 has the function of transmitting messages on the Uu interface between the UE and the eNB.

Control section 54 controls the operation of the UE including the above-described sections, and includes a CPU. Control section 54 reads a program procedure pre-stored in memory 55, and controls the operation of the UE in accordance with the operational procedure. Functions of control section 54 related to the present invention are as follows. Control section 54 controls the operation of the UE such as a power-off operation and termination of applications.
Moreover, in each operation, control section 54 determines whether or not a connection needs to be established (connection establishment necessity).

Furthermore, control section 54 requests NAS layer section 51 and RRC layer section 52 to generate an NAS message and an RRC message, respectively, which are required to allow the UE to operate. At this time, control section 54 notifies RRC layer section 52 whether or not a connection needs to be established. Upon receiving the notification, RRC layer section 52 sets information on the necessity of establishing of a connection (connection establishment necessity information) in an RRC message.

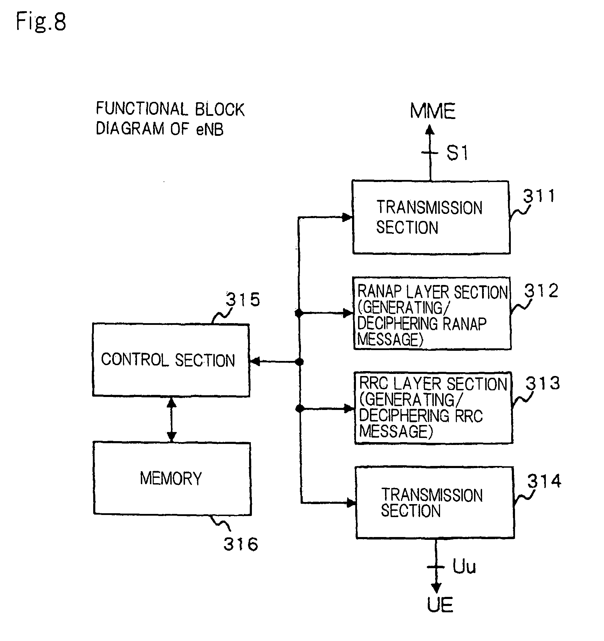

Figure 8 is a schematic functional block diagram of an eNB used in the exemplary embodiment. The eNB according to the exemplary embodiment includes transmission sections 311 and 314, RANAP (Radio Access Network Application Part) layer section 312, RRC layer section 313, control section 315, and memory 316.

Transmission section 311 has the function of transmitting messages on the S interface between the eNB and the MME. RANAP layer section 312 has the function of generating and deciphering RANAP messages. RRC layer section 313 has the function of generating and deciphering RRC messages. Transmission section 314 has the function of transmitting messages on the Uu interface between the UE and the eNB.

Control section 315 controls the operation of the eNB including the above-described sections, and includes a CPU. Control section 315 reads a program procedure pre-stored in memory 316, and controls the operation of the eNB in accordance with the operational procedure.

Furthermore, control section 315 notifies RANAP layer section 312 of information (connection establishment necessity information) on the necessity of a connection which is contained in an RRC message (deciphered by RRC layer section 313) received from the UE. Upon receiving the notification, RANAP layer section 312 sets the connection establishment necessity information in an RANAP message required to transfer a NAS message transferred via the RRC message to the MME when generating the RANAP message.

The RANAP message is a message (control message) relating to radio network signaling on the interface S1 between the eNB and the MME.

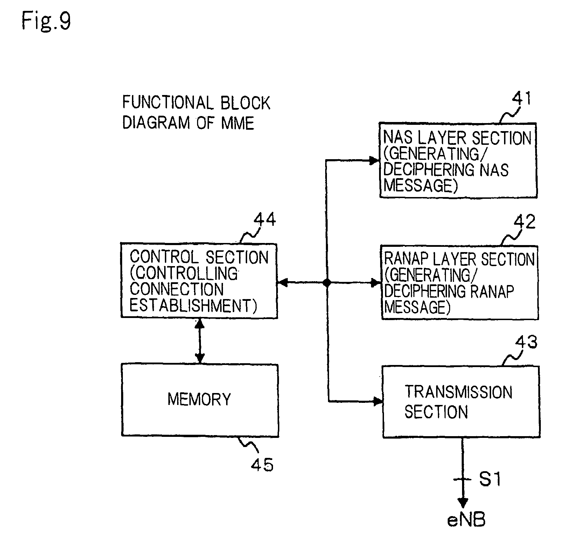

Figure 9 is a schematic functional block diagram of an MME used in the exemplary embodiment. The MME according to the exemplary embodiment includes NAS layer section 41, RANAP layer section 42, transmission section 43, control section 44, and memory 45. NAS layer section 41 has the function of generating and deciphering NAS messages. RANAP layer section 42 has the function of generating and deciphering RANAP messages. Transmission section 43 has the function of transmitting messages on the S1 interface between the MME and the eNB.

Control section 44 includes a CPU, and reads a program procedure pre-stored in memory 45 and controls the operation of the MME in accordance with the operational procedure. Furthermore, control section 44 determines whether or not a connection needs to be established, in accordance with connection establishment necessity information contained in an RANAP message received from the eNB and deciphered by RANAP layer section 42.

If the MME transmits a response to an NAS message transmitted by the UE, to the UE, control section 44 notifies RANAP layer section 42 of the connection establishment necessity information. In transferring an NAS message to be transmitted to the UE, to the eNB via an RANAP message, RANAP layer section 42 generates the appropriate RANAP message in accordance with the connection establishment necessity information from control section 44.

In the above description, the NAS message is transferred via the RRC message on the Uu interface and via the RANAP message on the S1 interface. In the 3GPP, a "Direct Transfer" message allowing only the transfer of the NAS message is specified for both the RRC message and the RANAP message.

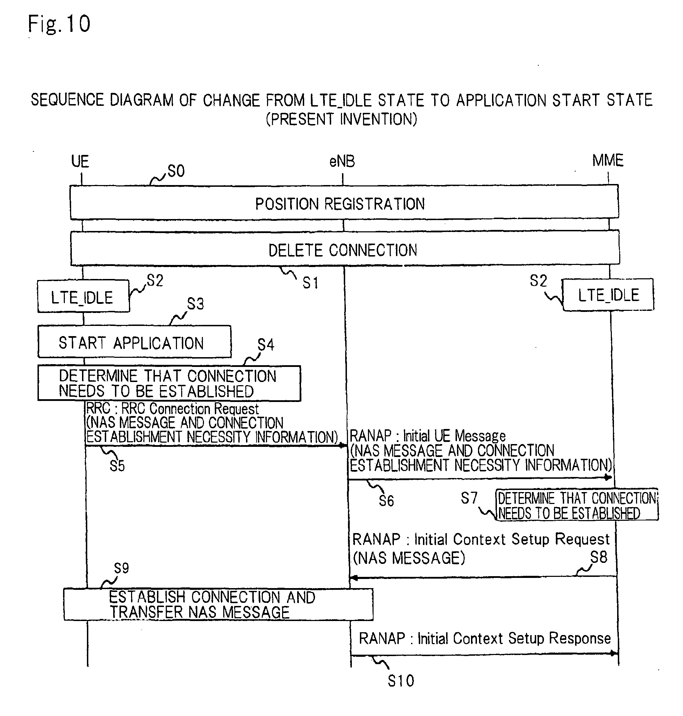

Now, the operation of the exemplary embodiment will be described with reference to a sequence flowchart in Figures 10 to 14. First, Figure 10 will be referenced. Figure 10 shows an example of an operation performed when the UE changes from an "LTE_IDLE" state to an application start state. In this operation example, an individual connection for the UE is established.

When the UE is powered on, first, position registration is performed (step S0). When the position registration is completed, information required to execute a security process on the NAS message is held by the UE and the MME. The information is a secret key or the like. Simultaneously with the position registration with the MME, a connection is established in order to allow registration with an SIP (Session Initiation I Protocol) server (not shown in the drawings) to be carried out.

If the UE does not start communication immediately after registration with the SIP server has been completed, the connection is deleted (step S1). When the connection is deleted, the UE comes into the "LTE_IDLE" state (step S2). If the user starts a relevant application in the UE to start communication (step S3), control section 54 of the UE determines that a connection needs to be established (step S4).

To start communication, the UE transmits an RRC message in order to allow transfer of an. NAS message and establishment of a connection to be achieved. In the LTE scheme, a proposal has been made to transfer the NAS message as a part of the RRC message. Thus, the RRC message (RRC Connection Request) needs to contain not only the NAS message but also information (connection establishment necessity information) indicating that a connection needs to be established (step S5).

Upon receiving the RRC message from the UE, the eNB generates an RANAP (Initial UE Message) message containing the NAS message contained in the RRC message. The eNB then transfers the NAS message to the MME via the RANAP message. The RRC message contains the connection establishment necessity information. Thus, the eNB also sets the connection establishment necessity information in the RANAP message (step S6).

The MME receives and deciphers the RANAP message from the eNB to determine that it is necessary to establish a connection (step S7). Hence, the MME transmits an RANAP message (Initial Context Setup Request) requesting that a connection be established, to the eNB (step S8). When a response to the NAS message is transmitted to the UE, the RANAP message contains the NAS message.

In this manner, between the UE and the eNB, the individual connection for the UE is established and the NAS message is transferred (step S9). Thereafter, the eNB generates an RANAP message (Initial Context Setup Response) and returns a response to the MME (step S10).

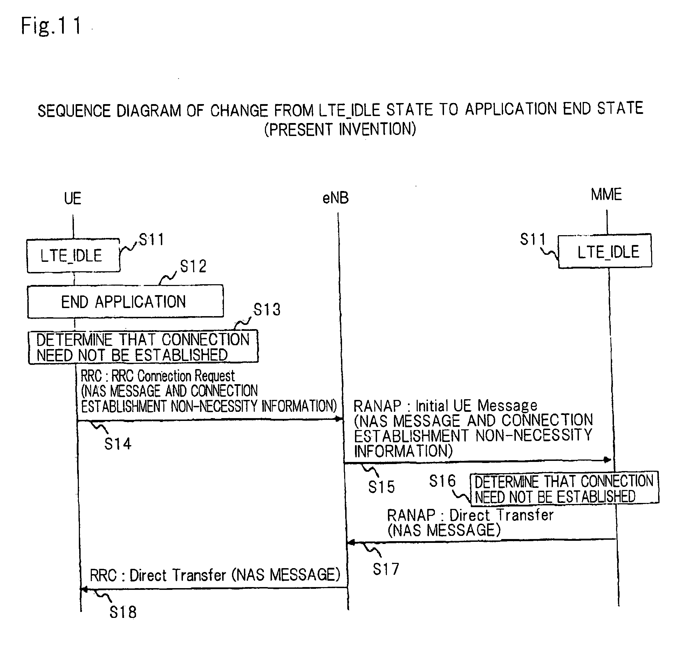

Now, an example of an operation performed when the "LTE_IDLE" state changes to an application end state will be described with reference to a sequence chart in Figure 11. In this operation example, the individual connection for the UE is not established. The UE changes from the "LTS_IDLE" state (step S11) to the application end state (step S12). Then, control section 54 of the UE determines that it is not necessary to establish a connection (step S13).

In this case, an example of the case where the application itself has been started but where the UE is in the "LTE_IDLE" state (no connection is established) is a case where the user is browsing the WEB. While the user's browsing through the WEB is interrupted, no data is transmitted to or received from the application. Thus, in order to save radio resources, the eNB may delete the individual connection for the UE without terminating the WEB application itself.

To notify the MME that the application has been terminated, the UE transfers a NAS message. The NAS message is transferred as a part of an RRC message (RRC Connection Request. Furthermore, the RRC message also contains connection establishment necessity information indicating that it is not necessary for a connection be established (step S14).

Upon receiving the RRC message, the eNB generates an RANAP message (Initial UE Message) containing the NAS message and transfers the NAS message to the MME via the RANAP message. Since the RRC message contains the connection establishment non-necessity information, the eNB sets the connection establishment non-necessity information in the RANAP message (step S15).

Upon receiving the RANAP message, the MME deciphers the message to determine that it is not necessary to establish a connection (step S16). Thus, the MME uses the RANAP message (Direct transfer) to request only the transfer of an NAS message without requesting that a connection be established (step S17).

In accordance with the RANAP message received from the MME, the eNB uses the RRC message (Direct transfer) to transfer the NAS message to the UE without establishing an individual connection for the UE (step S18).

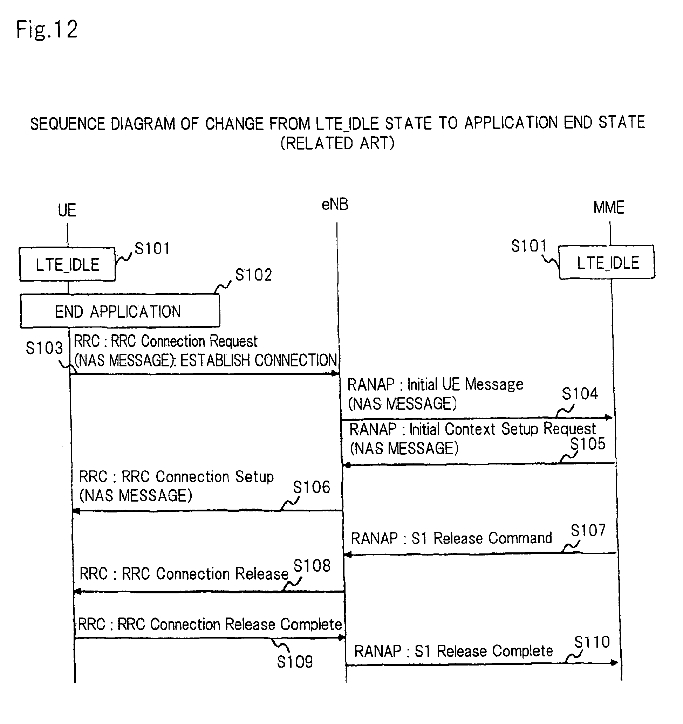

An example of an operation performed when the "LTE_IDLE" state changes to the application end state based on the related art will be described with reference to Figure 12 in order to clarify the difference between the example of the operation performed when the "LTE_IDLE" state changes to the application end state according to the present invention and the example of the operation according to the related art.

The UE changes from the "LTE_IDLE" state (step S101) to the application end state (step S102). Then, since a connection needs to be established, the following sequence is started.
The UE transfers an NAS message in order to notify the MME that the application is to be terminated; the NAS message is transferred as a part of an RRC message (RRC Connection Request) (step S103). In this case, obviously, the RRC message does not contain the connection establishment non-necessity information according to the present invention.

Upon receiving the RRC message containing the NAS message, the eNB generates and transfers an RANAP message (Initial UE Message) containing the NAS message to the MME (step S104). Upon receiving the RANAP message, the MME transfers an RANAP message (Initial Context Setup Request) to the eNB to request that a connection be established. The MME also requests that the NAS message be transferred to the UE (step S105). In accordance with the RANAP message received from the MME, the eNB establishes an individual connection for the UE, and uses an RRC message (RRC Connection Setup) to transfer the NAS message to the UE (step S106).

The individual connection for the UE established in step S106 is set only to allow the NAS message to be transferred to the UE. Thus, when the transfer of the NAS message is completed, the connection is released in accordance with a procedure based on an RANAP message (S1 Release Command) (step S107), RRC messages (RRC Connection Release and RRC Connection Release Complete) (steps S108 and S109), and an RANAP message (S1 Release Complete) (step S110).

As described above, in the procedure according to the related art, the individual connection for the UE established in step S106 is set only to allow the NAS message to be transferred. Thus, once the transfer of the NAS message is completed, the connection is released. In contrast, as shown in Figure 11, in the procedure according to the present invention, when the MME determines that it not necessary to establish an individual connection for the UE, no connection is established. This eliminates the need for steps S107 to S110 in Figure 12.

Now, the security of the NAS message will be described. In existing UTRAN 1 shown in Figure 1, RNC 111 is generally located in a place such as a station building where security is ensured. Thus, when a control message is exchanged between the UE and UTRAN 1 or between the UE and core network 2 via UTRAN 1, security processing (ciphering (secrecy) and integrity protection (detection of alteration)) is carried out on the control message only between the UTRAN and the UE.

Hence, if security processing is carried out on the NAS message, which is a control message, information for secrecy needs to be exchanged between the UE and the UTRAN before the NAS message is transmitted. To achieve this, a connection needs to be set between the UE and the UTRAN using the RRC message.

On the other hand, the eNB according to the currently proposed LTE scheme is located in a place (for example, outdoors) similar to that in which the NodeB in the UTRAN is located. Thus, E-UTRAN 3 shown in Figure 2 does not ensure the security of the control message transferred on the S1 interface. Hence, in the LTE scheme, the security processing (ciphering and integrity protection) of the NAS message, which is a control message exchanged between the UE and the MME, is carried out between the UE and MME.

Information (secret key and the like) required to carry out security processing on the NAS message is held mutually by the UE and the MME when the UE is in the "LTE_IDLE" state or the "LTE_ACTIVE" state. Consequently, the NAS message is kept secret by the UE and the MME. Thus, as in the present invention, the secret NAS massage can be transmitted in a radio zone without the need to establish a connection between the UE and the E-UTRAN. As a result, the security of the NAS message is ensured without any problem.

That is, therefore, in the sequence shown in Figures 10 and 11, the UE and the MME mutually carry out security processing on the NAS message. This enables the processing carried out by the eNB to establish a connection to be reduced without impairing security. The security processing also enables a reduction in the amount of control messages transmitted and received between the radio base station and the higher-order apparatus in order to establish a connection.

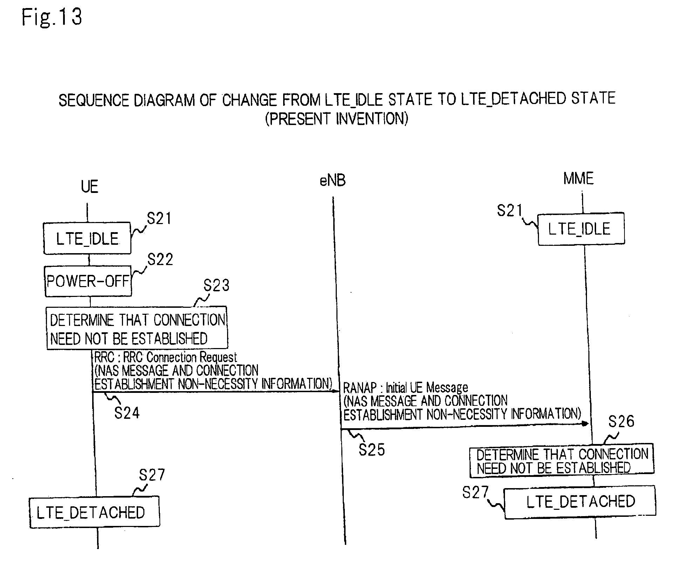

Now, Figure 13 will be referenced. Figure 13 shows an example of an operation performed when the UE changes from the "LTE_IDLE" state to an "LTE_DETACHED" state. In this operation example, an individual connection for the UE is not established. If the UE in the "LTE_IDLE" state (step S21) is powered off (step S22), control section 54 of the UE determines that no connection needs to be established (step S23). The UE transfers an NAS message in order to notify the MME that the UE is to be powered off; the NAS message id is transferred as a part of an RRC message (RRC Connection Request). At this time, the RRC message contains connection establishment non-necessity information (step S24). After transmitting the RRC message, the UE changes to the "LTE_DETACHED state (step S27).

The eNB generates an RANAP message (Initial UE Message) containing an NAS message. The eNB then transfers the NAS message to the MME via the RANAP message. In this case, since the RRC message contains the connection establishment non-necessity information, the eNB also sets the information in the RANAP message (step S25).

The MME receives and deciphers the RANAP message to determine that no connection needs to be established (step S26). Hence, the MME does not request the eNB to establish a connection. If the UE is powered off, the MME transmits no NAS message to the UE. After receiving the NAS message notifying the MME that the UE is to be powered off, the MME determines that the UE has changed to the "LTE_IDLE" state (step S27).

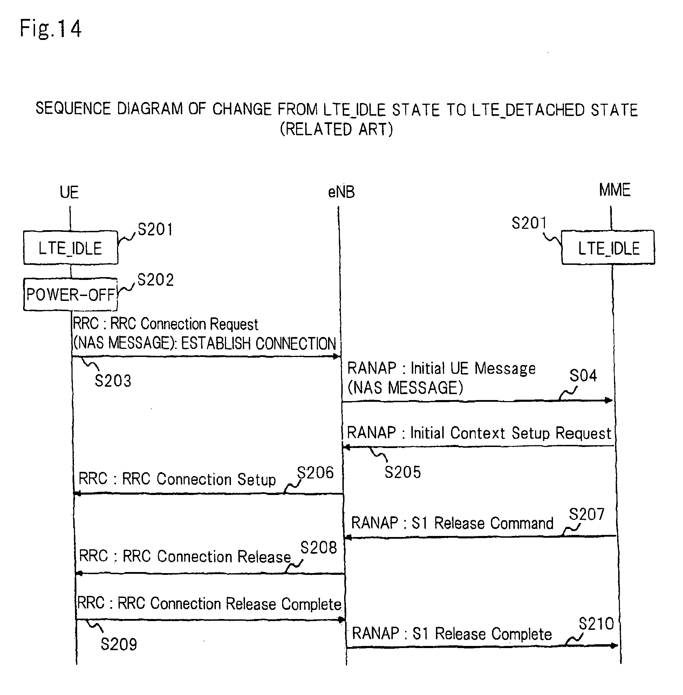

An example of an operation performed when the "LTE_IDLE" state changes to the "LTE_DETACHED" state based on the related art will be described with reference to Figure 14 in order to clarify the difference between the example of the operation performed when the "LTE_IDLE" state changes to the "LTE_DETACHED" state according to the present invention and the example of the operation according to the related art.

A connection needs to be established even if the UE in the "LTE_IDLE" state (step S201) is powered off (step S202). Thus, the following sequence is started.

The UE transfers an NAS message (RRC Connection Request) in order to notify the MME that the UE is to be powered off; the NAS message is subjected to security processing and is transferred as a part of an RRC message as described above (step S203). Of course, the RRC message contains no connection establishment necessity information according to the present invention.

Upon receiving the RRC message, the eNB generates an RANAP message (Initial UE Message) containing an NAS message. The eNB then transfers the NAS message to the MME via the RANAP message (step S204). Upon receiving the RANAP message, the MME generates an RANAP message (Initial Context Setup Request) requesting the eNB to establish a connection (step S205).

Upon receiving the RANAP message, the eNB establishes another individual connection for the UE in accordance with the RANAP message (RRC Connection Setup) (step S206). Like steps S107 to S110 shown in Figure 12, subsequent steps S207 to S210 correspond to the process of releasing the individual connection for the UE established in step S206. As in the case of Figure 12, this connection is set only to allow the NAS message to be transferred. Thus, once the transfer of the NAS message is completed, the connection is released.

As described above, the procedure according to the related art requires the process (steps S207 to S210) of releasing the individual connection for the UE established in step S206. However, in the procedure according to the present invention, the MME determines that it not necessary to establish an individual connection for the UE and avoids establishing a connection. This eliminates the need for the connection establishing process and the connection releasing process.

As described above, in the present invention, when the UE transmits the control message (NAS message) exchanged between the UE and the MME, to the MME, the UE notifies the MME, via the E-UTRAN, whether or not it is necessary to establish an individual connection for the UE. Thus, when no connection needs to be established, the E-UTRAN and the MME need not establish or release an individual connection for the UE.

In the above-described exemplary embodiment, as information indicating the need to establish an individual connection for the UE, connection establishment necessity information is generated by the UE and mixed into the RRC message and the RANAP message. However, the following method may be used instead of the connection establishment necessity information: each RRC message and each RANAP message may have a form that varies between when a connection needs to be established and when no connection needs to be established. For example, if no connection needs to be established, a "Common Direct Transfer" message may be used both as an RRC message and as an RANAP message. However, the present invention is not limited to this configuration, and various modifications are possible.

In the exemplary embodiment, the mobile communication system according to the LTE scheme shown in Figure 2 has been described. Each of eNBs 31 to 34 included in E-UTRAN 3 provides the functions of NodeB 112 and 113 and can thus be called a radio base station. Furthermore, MME 4 corresponds to the core network shown in Figure 1 and is thus a managing apparatus positioned at a level higher than that at which eNBs 31 to 34 (that is, E-UTRAN 3) are positioned and can thus be called a higher-order apparatus.

Additionally, the present invention is applicable not only to the mobile communication system according to the LTE scheme shown in Figure 2 but also to the existing communication system shown in Figure 1.

Obviously, the following configuration is possible. The functional sections of the exemplary embodiment including the control sections of the UE, the eNB, and the MME are all included in a computer. Operational procedures for the functional sections are stored in a recording medium such as a ROM as programs. The computer then reads and implements the programs.

According to the present invention configured as described above, a mobile station transmits connection establishment necessity information to a higher-order apparatus together with a control message. The higher-order apparatus then uses the connection establishment necessity information to determine that no connection is required. Thus, the control message is transferred without the need to establish a connection used for the control message (the connection is deleted after transfer of the control message has been completed). Thus, the amount of processing carried out by the radio base station in order to establish a connection can be reduced. This configuration also enables a reduction in the amount of control messages transmitted and received between the radio base station and the higher-order apparatus in order to establish a connection.

The present invention has been described with reference to the exemplary embodiment. However, the present invention is not limited to the exemplary embodiment. As in the case of the example shown in the first exemplary embodiment, various changes that are understandable by those skilled in the art within the scope of the present invention may be made to the configuration and details of the present invention.

The present application claims the priority based on JP2007-275863A filed on October 24, 2007, and incorporates all of the disclosures in JP2007-275863A.

## Claims

1. A mobile communication system including a mobile station, a radio base station, and a higher-order apparatus for the radio base station, wherein:
when transmitting a control message from the mobile station to the higher-order apparatus, the mobile station transmits information indicating whether or not it is necessary to establish an individual connection for the mobile station, to the higher-order apparatus, and
the higher-order apparatus receives and uses the information to determine that it is not necessary for the connection to be established.

2. The system according to claim 1, wherein the higher-order apparatus controls establishment of the connection in accordance with the information.

3. The system according to claim 1 or claim 2, wherein the mobile station transmits both the control message from the mobile station to the higher-order apparatus and the information contained in a control message from the mobile station to the radio base station.

4. The system according to any of claims 1 to 3, wherein the radio base station transmits both the control message from the mobile station to the higher-order apparatus and the information both contained in a control message from the radio base station to the higher-order apparatus.

5. The system according to any of claims 1 to 4, wherein instead of transmitting the information, the mobile station varies a form of the control message from the mobile station to the higher-order apparatus depending on whether or not it is necessary to establish a connection.

6. The system according to any of claims 1 to 5, wherein instead of transmitting the information, the mobile station varies a form of the control message from the radio base station to the higher-order apparatus depending on whether or not it is necessary to establish a connection.

7. The system according to any of claims 1 to 6, wherein when the information indicating that it is not necessary for a connection to be established, the higher-order apparatus requests the radio base station to transfer a control message from the higher-order apparatus to the mobile station without requesting establishment of the connection.

8. The system according to claim 7, wherein the higher-order apparatus varies a form of the control message from the higher-order apparatus to the radio base station depending on whether or not it is necessary to establish the connection.

9. The system according to any of claims 1 to 8, wherein the control message between the mobile station and the higher-order apparatus is subjected to security processing.

10. The system according to any of claims 1 to 9, wherein the control message from the mobile station to the higher-order apparatus is an NAS (Non-Access Stratum) message.

11. The system according to claim 3, wherein the control message from the mobile station to the radio base station is an RRC (Radio Resource Control) message.

12. The system according to claim 4, wherein the control message from the radio base station to the higher-order apparatus is an RANAP (Radio Access Network Application Part) message.

13. A communication method for a mobile communication system including a mobile station, a radio base station, and a higher-order apparatus for the radio base station, comprising:
when transmitting a control message from the mobile station to the higher-order apparatus, transmitting, to the higher-order apparatus, indicating whether or not it is necessary to establish an individual connection for the mobile station, the information being used by the higher-order apparatus to determine that the individual connection for the mobile station need not be established.

14. The method according to claim 13, further comprising controlling establishment of the connection in accordance with the information.

15. The method according to claim 13 or claim 14, wherein the mobile station transmits both the control message from the mobile station to the higher-order apparatus and the information contained in a control message from the mobile station to the radio base station.

16. The method according to any of claims 13 to 15, further comprising allowing the radio base station to transmit both the control message from the mobile station to the higher-order apparatus and the information contained in a control message from the radio base station to the higher-order apparatus.

17. The method according to any of claims 13 to 16, wherein instead of transmitting the information, the mobile station varies a form of the control message from the mobile station to the higher-order apparatus depending on whether or not it is necessary to establish the connection.

18. The method according to any of claims 13 to 17, wherein instead of transmitting the information, the mobile station varies a form of the control message from the radio base station to the higher-order apparatus depending on whether or not it is necessary to establish the connection.

19. The method according to any of claims 13 to 18, further comprising allowing the higher-order apparatus to request the radio base station to transfer a control message from the higher-order apparatus to the mobile station without requesting establishment of the connection, when the information indicates that it is not necessary for the connection to be established.

20. The method according to claim 19, wherein the higher-order apparatus varies a form of the control message from the higher-order apparatus to the radio base station depending on whether or not it is necessary to establish the connection.

21. The method according to any of claims 13 to 20, wherein the control message between the mobile station and the higher-order apparatus is subjected to security processing.

22. The method according to any of claims 13 to 21, wherein the control message from the mobile station to the higher-order apparatus is an NAS (Non-Access Stratum) message.

23. The method according to claim 15, wherein the control message from the mobile station to the radio base station is an RRC (Radio Resource Control) message.

24. The method according to claim 16, wherein the control message from the radio base station to the higher-order apparatus is an RANAP (Radio Access Network Application Part) message.

25. A mobile station in a mobile communication system including the mobile station, a radio base station, and a higher-order apparatus for the radio base station, comprising:
a transmission section which, when transmitting a control message from the mobile station to the higher-order apparatus, transmits, to the higher-order apparatus, information indicating whether or not it is necessary to establish an individual connection for the mobile station, the information being used by the higher-order apparatus to determine that it is not necessary to establish the individual connection for the mobile station.

26. The mobile station according to claim 25, wherein both the control message to the higher-order apparatus and the information contained in a control message are transmitted to the radio base station.

27. The mobile station according to claim 25 or 26, wherein, instead of transmitting the information, a form of the control message to the higher-order apparatus is varied depending on whether or not it is necessary to establish the connection.

28. The mobile station according to any of claims 25 to 27, wherein the control message to the higher-order apparatus is subjected to security processing.

29. A radio base station in a mobile communication system including a mobile station, the radio base station, and a higher-order apparatus for the radio base station, comprising:
a first transmission section which receives information indicating whether or not it is necessary to establish an individual connection for the mobile station, the information being transmitted by the mobile station when transmitting a control message from the mobile station to the higher-order apparatus and used by the higher-order apparatus to determine that it is not necessary to establish the individual connection for the mobile station, and a second transmission section which transmits both the control message from the mobile station to the higher-order apparatus and the information contained in the control message to the higher-order apparatus.

30. The radio base station according to claim 29, wherein, instead of transmitting the information, a form of the control message from the radio base station to the higher-order apparatus is varied depending on whether or not it is necessary to establish the connection.

31. The radio base station according to claim 29 or 30, wherein the control message from the mobile station to the higher-order apparatus is subjected to security processing.

32. A higher-order apparatus in a mobile communication system including a mobile station, a radio base station, and the higher-order apparatus for the radio base station, comprising:
a transmission section which receives information indicating whether or not it is necessary to establish an individual connection for the mobile station, the information being transmitted by the mobile station in transmitting a control message from the mobile station to the higher-order apparatus; and
a control section which uses the information to determine that it is not necessary for the connection to be established.

33. The higher-order apparatus according to claim 32, wherein establishment of the connection is controlled in accordance with the information.

34. The higher-order apparatus according to claim 33, wherein the radio base station is requested to transfer a control message from the higher-order apparatus to the mobile station without requesting establishment of the connection, when the information indicates that it is not necessary for the connection to be established.

35. The higher-order apparatus according to claim 34, wherein a form of the control message from the higher-order apparatus to the radio base station is varied depending on whether or not it is necessary to establish the connection.

36. The higher-order apparatus according to any of claims 32 to 35, wherein the control message between the mobile station and the higher-order apparatus is subjected to security processing.

37. A program for allowing a computer to execute an operation of a mobile station in a mobile communication system including the mobile station, a radio base station, and a higher-order apparatus for the radio base station, comprising:
a process of, when transmitting a control message from the mobile station to the higher-order apparatus, transmitting, to the higher-order apparatus, information indicating whether or not it is necessary to establish an individual connection for the mobile station, the information being used by the higher-order apparatus to determine that it is not necessary to establish the individual connection for the mobile station.

38. A program for allowing a computer to execute an operation of a radio base station in a mobile communication system including a mobile station, the radio base station, and a higher-order apparatus for the radio base station, comprising:
a process of receiving information indicating whether or not it is necessary to establish an individual connection for the mobile station, the information being transmitted by the mobile station when transmitting a control message from the mobile station to the higher-order apparatus and used by the higher apparatus to determine that it is not necessary to establish the individual connection for the mobile station; and
a process of transmitting both the control message from the mobile station to the higher-order apparatus and the information contained in the control message to the higher-order apparatus.

39. A program for allowing a computer to execute an operation of a higher-order apparatus for a radio base station in a mobile communication system including a mobile station, the radio base station, and the higher-order apparatus for the radio base station, comprising:
a process of receiving information indicating whether or not it is necessary to establish an individual connection for the mobile station, the information being transmitted by the mobile station when transmitting a control message from the mobile station to the higher-order apparatus; and
a process for determining that it is not necessary to establish the connection.
